Europäisches Patentamt

European Patent Office

Office européen des brevets

(19)

(11) **EP 1 452 904 A2**

(12) # EUROPEAN PATENT APPLICATION

(43) Date of publication:
**01.09.2004 Bulletin 2004/36**

(51) Int Cl.$^7$: **G02F 1/29**

(21) Application number: **04250393.8**

(22) Date of filing: **24.01.2004**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **25.02.2003 JP 2003047140**

(71) Applicant: **ALPS ELECTRIC CO., LTD.**
**Ota-ku Tokyo 145 (JP)**

(72) Inventor: **Kitagawa, Hitoshi**
**Oka-ku, Tokyo 145 (JP)**

(74) Representative: **Kensett, John Hinton**
**Saunders & Dolleymore,**
**9 Rickmansworth Road**
**Watford, Hertfordshire WD18 0JU (GB)**

(54) **Light deflector and optical switch including same**

(57) A light deflector (A) is composed of an electro-optic photonic crystal in which refraction angle of light (L) incident from outside can be controlled by controlling an electric field applied to the electro-optic photonic crystal so as to change the refractive index of the material constituting the photonic crystal and in which the change in the refraction angle in response to the change in the unit refractive index of the material is $10^3$ degrees or more. An optical switch includes the light deflector and a photonic crystal waveguide (B), the photonic crystal waveguide having a photonic bandgap for light of a predetermined wavelength and also having at least one waveguide which passes the light of the predetermined wavelength.

## FIG. 1

EP 1 452 904 A2

**Description**

BACKGROUND OF THE INVENTION

1. Field of the Invention

The present invention relates to light deflectors composed of electro-optic photonic crystals and optical switches including the same.

2. Description of the Related Art

Materials having periodic refractive index structures at a scale on the order of the wavelength of light are known as photonic crystals. In photonic crystals, a bandgap that forbids the existence of light with wavelengths corresponding to the period, i.e., a so-called "photonic bandgap", appears, and thereby the existence and propagation of light in a predetermined wavelength band are forbidden. Accordingly, photonic crystals are considered to have the potential to freely control light, and they are thus receiving attention as next-generation electronic and optoelectronic materials.

Novel concept of such photonic crystals was first theoretically proposed by S. John and E. Yablonovitch in 1987, and various experimental methods are currently under study.

In order to produce photonic crystals with three-dimensional periodic structures, research on methods including microfabrication techniques and deposition techniques for semiconductor elements and devices have been conducted. Methods have been under study in which particles with a size on the order of the wavelength of light are used as structural units and the particles are stacked two-dimensionally or three-dimensionally.

The present inventor has been carrying out research on such photonic crystals and has found a novel photonic crystal by treating photonic crystals with two-dimensional or three-dimensional periodic structures using a technique invented by the present inventor, and as a result, the present invention on a light deflector and an optical switch has been achieved.

As a conventional optical switch, an optical modulator using the electro-optical effect in $LiNbO_3$ or the like is generally known, for example, as disclosed in Japanese Unexamined Patent Application Publication No. 2002-196296.

Small size and short switching time are characteristics strongly required for optical switches used in optical transmission systems, which have recently become rapidly widespread.

However, in conventional optical modulators, since the length of the phase shifter is determined by the electro-optic coefficient, the size of such devices is about several centimeters.

SUMMARY OF THE INVENTION

It is an object of the present invention to provide a light deflector which is capable of changing, at high speed, the refraction angle of light incident from outside so that the direction of transmission of the light can be changed and which can be miniaturized.

It is another object of the present invention to provide an optical switch including the light deflector in which the direction of transmitted light of a predetermined wavelength can be switched at high speed and which can be miniaturized.

In one aspect of the present invention, a light deflector is composed of an electro-optic photonic crystal in which the refraction angle of light incident from outside can be controlled by controlling an electric field applied to the electro-optic photonic crystal so as to change the refractive index of the material constituting the photonic crystal and in which the change in the refraction angle in response to the change in the unit refractive index of the material is $10^3$ degrees or more, and preferably $10^4$ degrees or more.

The light deflector of the present invention uses the superprism effect in which the refraction angle is sensitively changed by strong anisotropy in the dispersion surface of the electro-optic photonic crystal. By changing the magnitude of the electric field applied to the electro-optic photonic crystal, the refractive index of the material constituting the photonic crystal can be changed, and thereby the refraction angle of light incident from outside can be changed. Consequently, by controlling the electric field applied to the electro-optic photonic crystal, the refraction angle of light entering the electro-optic photonic crystal from outside can be controlled and the direction of light emitted from the electro-optic photonic crystal can be controlled.

Furthermore, the refraction angle of light entering the electro-optic photonic crystal from outside can be changed rapidly in response to the change in the electric field applied to the electro-optic photonic crystal.

Furthermore, since the electro-optic photonic crystal can be miniaturized, a miniature light deflector can be produced.

In the light deflector of the present invention, preferably, the electro-optic photonic crystal includes a combination of a plurality of first dielectric members and a second dielectric member or a combination of a first dielectric member and a plurality of second dielectric members, the first dielectric member being composed of a material with a dielectric constant changeable by an electric field (a first material with dielectric constant changeable by electric field) in which the dielectric constant is controlled by an electric field, the second dielectric member having a different dielectric constant from that of the first dielectric member, wherein a plurality of first dielectric members or second dielectric members are periodically arrayed separately from each other, thus forming a periodic structure (first periodic structure); the other dielectric member is disposed in the space of the periodic arrangement; and the first dielectric member is composed of a material selected from the group consisting of $LiNbO_3$, $LiTaO_3$, $BaTiO_3$, GaAs, ZnO, $NH_4H_2PO_4$, and $KH_2PO_4$.

In the light deflector having such a structure, when the magnitude of the electric field applied to the electro-optic photonic crystal is changed, the refractive index of the first dielectric member is changed, and consequently, the refraction angle of light incident from outside is changed.

The first dielectric member is composed of a material which shows electro-optical characteristics in which the magnitude of the refractive index changes as the magnitude of the electric field applied is changed.

As the material for the second dielectric member, air or the like is used.

In the light deflector of the present invention, a plurality of regions in which air is present as the second dielectric members may be periodically arrayed separately from each other in the first dielectric member.

Alternatively, in the light deflector of the present invention, a plurality of first dielectric members may be periodically arrayed separately from each other and a region in which air is present as the second dielectric member may be disposed in the space of the periodic arrangement.

In the light deflector of the present invention, the direction of the electric field applied to the electro-optic photonic crystal preferably corresponds to the direction with a higher electro-optic coefficient of the electro-optic photonic crystal, and more preferably corresponds to the direction with a higher electro-optic coefficient of the crystal constituting the first dielectric member. For example, in the case of a $LiNbO_3$ crystal, the electric field is preferably applied in the c-axis direction. In view of the shape, the electric field is preferably applied in the direction with a smaller thickness of the electro-optic photonic crystal.

In the light deflector of the present invention, preferably, the direction of the light incident from outside corresponds to a direction other than the direction of the normal line of the dispersion surface of the electro-optic photonic crystal, or a direction other than the direction perpendicular to the dispersion surface of the electro-optic photonic crystal.

If the direction of the light incident from outside corresponds to the direction of the normal line of the dispersion surface of the electro-optic photonic crystal, the light entering the electro-optic photonic crystal is transmitted without being refracted, resulting in no change to the refraction angle.

The light deflector of the present invention may be provided with electrodes for applying an electric field to the electro-optic photonic crystal.

The light deflector of the present invention may be provided with a variable power unit which is capable of applying a DC or AC electric field to the electro-optic photonic crystal and in which the magnitude of the voltage (electric field) applied can be varied.

Furthermore, the light deflector of the present invention may be provided with a unit for introducing light into the electro-optic photonic crystal.

In another aspect of the present invention, an optical switch includes the light deflector of the present invention and a photonic crystal waveguide, the photonic crystal waveguide having a photonic bandgap for light of a predetermined wavelength and also having at least one waveguide which passes the light of the predetermined wavelength.

In the optical switch of the present invention, as the light entering the electro-optic photonic crystal constituting the light deflector, light in a wavelength band whose existence is forbidden by the photonic bandgap is used.

In the optical switch having such a structure, when the magnitude of the electric field applied to the electro-optic photonic crystal constituting the light deflector is changed, the refraction angle of light of a predetermined wavelength entering the electro-optic photonic crystal is changed, and the direction of light of the predetermined wavelength emitted from the electro-optic photonic crystal (outgoing light) is changed. Consequently, the outgoing light is transmitted through a waveguide which is present in the direction of the emitted light of the predetermined wavelength, among the waveguides provided in the photonic crystal waveguide. Therefore, the direction in which the transmitted light of the predetermined wavelength passes through can be switched at high speed. Since the photonic crystal waveguide can also be miniaturized along with the electro-optic photonic crystal, it is possible to produce a miniature optical switch.

The photonic crystal waveguide provided in the optical switch of the present invention includes a third dielectric member composed of a second material with a dielectric constant changeable by an electric field in which the dielectric constant is controlled by an electric field and a fourth dielectric member having a different dielectric constant from that of the third dielectric member, wherein a plurality of third dielectric members or fourth dielectric members are periodically arrayed separately from each other to form a periodic structure (second periodic structure); and the other dielectric member is disposed in the space of the periodic arrangement. The photonic crystal waveguide also includes a region in which the periodic structure is omitted at least in part, the region being a waveguide, and a plurality of waveguides may be provided in response to the refraction angles of light entering the light deflector. The periodic structure has a photonic bandgap for light of a predetermined wavelength.

In the photonic crystal, by partially omitting the periodic structure in which a plurality of third dielectric members or fourth dielectric members are periodically arrayed separately from each other, it is possible to introduce a defect corresponding to the portion omitted. A localized state appears in the photonic bandgap due to the defect, and light is trapped therein. By continuously connecting defects, it is possible to guide light along the defects, and a waveguide can be formed along the portions in which the periodic structure is omitted. Consequently, it is possible to provide a photonic crystal waveguide in which light can be guided along the waveguide.

By forming a plurality of waveguides corresponding to the refraction angles of light of a predetermined wavelength entering the light deflector, when the magnitude of the electric field applied to the electro-optic photonic crystal is changed and the refraction angle of light of the predetermined wavelength entering the electro-optic photonic crystal is changed accordingly, thus changing the direction of the light of the predetermined wavelength emitted from the electro-optic photonic crystal (outgoing light), the outgoing light is transmitted through the waveguide corresponding to the refraction angle of light of the predetermined wavelength, among the waveguides provided in the photonic crystal waveguide. Therefore, the direction of emission of the transmitted light of the predetermined wavelength can be switched at high speed.

The third dielectric member used in the photonic crystal waveguide may be composed of a material selected from the group consisting of Si, GaP, GaAs, InP, ZnTe, Ge, LiNbO$_3$, LiTaO$_3$, BaTiO$_3$, ZnO, NH$_4$H$_2$PO$_4$, and KH$_2$PO$_4$.

By forming the third dielectric member using such a material, it is possible to utilize a high dielectric constant and a high refractive index.

The fourth dielectric member used in the photonic crystal waveguide may be composed of a material selected from the group consisting of air and liquid crystal.

In the photonic crystal waveguide, the array period of the periodic structure of the dielectric members preferably corresponds to a fraction of the wavelength of predetermined light, and by properly designing the period, the lattice shape of the array, the refractive indexes of the dielectric members, the shape, etc., it is possible to control the photonic bandgap.

An embodiment of the present invention will now be described, by way of example, with reference to the accompanying diagrammatic drawings, in which:

FIG. 1 is a plan view which schematically shows a structure of an optical switch in an embodiment of the present invention;

FIG. 2 is a sectional view of the optical switch shown in FIG. 1;

FIG. 3 is an assembly view of one of the substrates constituting a photonic crystal waveguide provided in the optical switch shown in FIG. 1; and

FIG. 4 is an assembly view of the other substrate constituting the photonic crystal waveguide provided in the optical switch shown in FIG. 1.

DESCRIPTION OF THE PREFERRED EMBODIMENTS

The preferred embodiments of the present invention will be described in detail with reference to the drawings.

It is to be understood that the present invention is not limited to the embodiments described below. In order to facilitate the description in the drawings, the individual components are shown on different scales.

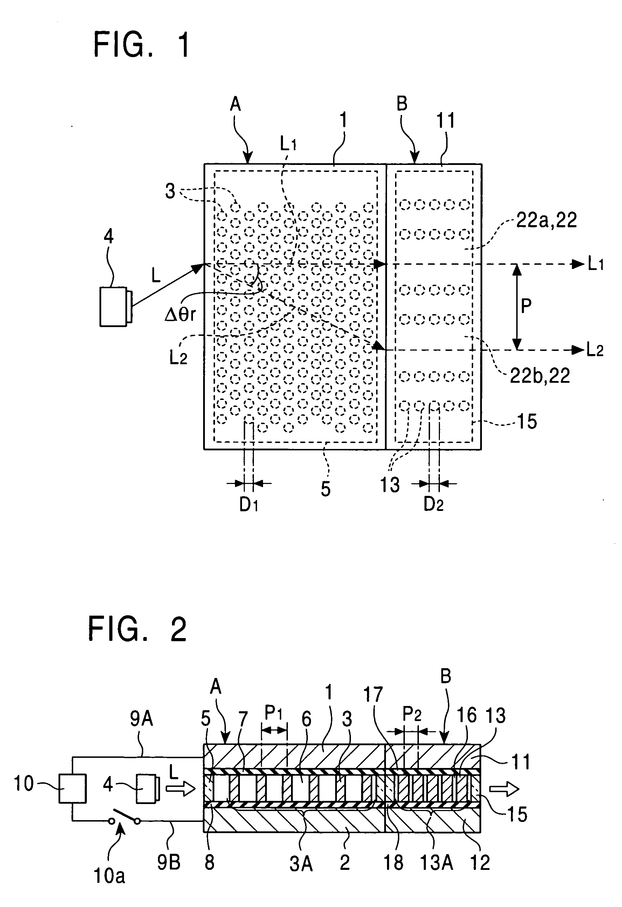

FIG. 1 is a plan view which schematically shows a structure of an optical switch in an embodiment of the present invention, and FIG. 2 is a sectional view of the optical switch shown in FIG. 1.

The optical switch in this embodiment includes a light deflector A and a photonic crystal waveguide B.

The light deflector A uses the superprism effect in which the refraction angle of incident light is sensitively changed by strong anisotropy in the wave-vector surface (dispersion surface) of an electro-optic photonic crystal.

The light deflector A is composed of an electro-optic photonic crystal which includes conductive substrates 1 and 2 which are placed substantially parallel to each other with a distance therebetween; a transparent sealing member 5 interposed between the peripheries of the substrates 1 and 2 and surrounding the void between the substrates 1 and 2; a plurality of cylinders (first dielectric members) 3 which are interposed between the substrates 1 and 2 and stand at an interval corresponding to a fraction of the wavelength of light; and air (a second dielectric member) 6 filled in the space surrounded by the substrates 1 and 2 and the sealing member 5 and around the cylinders 3. That is, in the electro-optic photonic crystal, a plurality of cylinders 3 are periodically arrayed separately from each other, and the region in which the air 6 is present is disposed in the space of the periodic arrangement.

A light source 4, such as a laser emission device, which is capable of emitting light of a desired wavelength is placed in the exterior of the transparent sealing member 5, separately from the electro-optic photonic crystal. Light L of a predetermined wavelength (e.g., 1,550 nm or 1,310 nm) is emitted from the light source 4 so as to be incident on the void between the substrates 1 and 2 constituting the electro-optic photonic crystal through the transparent sealing member 5.

In the optical switch of this embodiment, as the incident light L entering the electro-optic photonic crystal from outside, light in a wavelength band whose existence is forbidden by the photonic bandgap of the photonic crystal waveguide B is used. For example, if the light L of a predetermined wavelength transmitted to the optical switch is light of a wavelength of 1,550 nm, the photonic bandgap is about 100 nm (1.45 $\mu$m to 1.55 $\mu$m).

The substrates 1 and 2 are composed of a high-dielectric material (first high-dielectric material), such as ion-doped, highly conductive $LiNbO_3$, and oxide layers 7 and 8 are disposed on the opposing surfaces of the substrates 1 and 2, the oxide layers 7 and 8 being formed by surface oxidation or the like of the $LiNbO_3$ substrates. The material for the substrates 1 and 2 must be a material with a dielectric constant changeable by an electric field in which the dielectric constant is controlled by an electric field (a first material with dielectric constant changeable by electric field) and also a material showing electro-optic characteristics in which the refractive index changes as the magnitude of an electric field applied is changed (hereinafter also referred to as an "electro-optic material"). Therefore, the substrates 1 and 2 may be composed of $LiTaO_3$, $BaTiO_3$, GaAs, ZnO, $NH_4H_2PO_4$, $KH_2PO_4$, or the like besides $LiNbO_3$ (refractive index n = 2.2 in the normal state, i.e., in the absence of an applied electric field).

The refractive indexes of these materials alternative to $LiNbO_3$ are as follows: $LiTaO_3$ = 2.2, $BaTiO_3$ = 2.4, GaAs = 3.4, ZnO = 2.0, $NH_4H_2PO_4$ = 1.5, and $KH_2PO_4$ = 1.5 (in the normal state, i.e., in the absence of an applied electric field). Each material has a high dielectric constant and shows electro-optic characteristics in which the refractive index changes as the magnitude of an electric field applied is changed.

In the electro-optic photonic crystal, the refraction angle of light incident from outside must be sensitively changed when the magnitude of an applied electric field is changed. The electro-optic photonic crystal does not necessarily have a bandgap. The difference in refractive index between the cylinder (first dielectric member) 3 and the second dielectric member 6 may be small.

The second dielectric member 6 must have a different dielectric constant from that of the first dielectric member 3. Consequently, the second dielectric member 6 may be composed of a liquid crystal instead of air. The refractive index of air is 1 both in the normal state (in the absence of an applied electric field) and in the presence of an applied electric field. With respect to a liquid crystal, the difference in dielectric constant between in the presence of an applied electric field and in the absence of an applied electric field is more noticeable compared with air. Specifically, it is possible to use a nematic liquid crystal with a dielectric constant of 2 to 3. If an electric field with an intensity of about 1 MV/cm is applied to such a nematic liquid crystal with a refractive index of 1.53 in the normal state, the refractive index is changed to 1.6.

The cylinders 3 which are the first dielectric members are formed by etching or the like of one of the substrates 1 and 2. In this embodiment, a plurality of cylinders 3 are formed at an interval corresponding to a fraction of the wavelength of predetermined light L emitted from the light source 4, and a set of the plurality of cylinders 3 constitutes a periodic structure (first periodic structure) 3A.

The distance $P_1$ between the centers of two adjacent cylinders 3 is set at about a fraction of the wavelength $\lambda$ of the predetermined light L ($0.2\lambda$ to $0.8\lambda$), and the diameter $D_1$ of the cylinder 3 is set at about a fraction of the wavelength $\lambda$ of the predetermined light L ($0.2\lambda$ to $0.8\lambda$). More specifically, when light with a wavelength of 1,550 nm is used, for example, the distance $P_1$ between the centers of two adjacent cylinders 3 may be selected from the range of 0.3 to 1.1 $\mu$m, and the diameter $D_1$ of the cylinder 3 may be selected from the range of 0.14 to 0.5 $\mu$m.

With respect to GaAs used as a material for the first high-dielectric material constituting the first dielectric members 3, since GaAs is used as a semiconductor material and can be imparted with conductivity by ion doping or the like, it is also possible to use GaAs as electrodes for applying an electric field to the electro-optic photonic crystal. When $LiNbO_3$ or the like is used as the first high-dielectric material constituting the first dielectric members 3, electrodes are provided on the respective outer surfaces of the substrates 1 and 2, and the electrodes are used for applying an electric field to the electro-optic photonic crystal.

A variable power unit 10 is connected to the substrates 1 and 2 by interconnect lines 9A and 9B, respectively. By turning on a switch 10a which is built in the interconnect line 9B, an alternating current (electric field) can be applied to the plurality of cylinders 3 interposed between the substrates 1 and 2. By turning off the switch 10a, the application of the alternating current (electric field) can be stopped. The variable power unit 10 is also constructed so that the magnitude of the voltage (electric field) applied to the substrates 11 and 12 can be changed.

The following equation (1) relates to the characteristics of the light deflector A in this embodiment.

$$\Delta\theta r = (\partial\theta r/\partial n)\Delta n$$

$$= (\partial\theta r/\partial n) \times (1/2) \times \gamma_{33}n^3E \quad ... (1)$$

where n is the refractive index of the electro-optic material (the refractive index of the first dielectric member 3 in this embodiment), θr is the refraction angle of light entering the electro-optic photonic crystal from outside, $\gamma_{33}$ is the electro-optic coefficient (Pockels coefficient), E is the intensity of an electric field applied to the electro-optic material (the first dielectric member 3 in this embodiment), and $(1/2) \times \gamma_{33}n^3E$ represents a difference in refractive index due to the electro-optic effect.

In this embodiment, since the light deflector A is composed of the electro-optic photonic crystal, if the magnitude of the electric field applied is changed, the refractive index of the plurality of cylinders (first dielectric members) 3 changes, resulting in a change in the refractive index of the entire electro-optic photonic crystal. Consequently, the refraction angle of light L entering the electro-optic photonic crystal from outside can be changed. The change in the refraction angle is $10^3$ degrees or more and preferably $10^4$ degrees or more, i.e., $\partial\theta r/\partial n$ is $10^3$ degrees or more and preferably $10^4$ degrees or more.

If $\partial\theta r/\partial n$ is less than $10^3$ degrees, the size of the device becomes about 1 cm or more, which is undesirable.

In the case of LiNbO₃, if an electric field of 10 V/1 μm is applied, the refractive index of the first dielectric member 3 changes by $10^{-3}$, and therefore the refraction angle of light entering the electro-optic photonic crystal from outside is changed by 1 degree. At an applied voltage of 2 V, the refraction angle of light entering the electro-optic photonic crystal from outside is changed by 2 degrees. Consequently, the position of the electro-optic photonic crystal from which light is emitted is changed by on the order of micrometers (about 17 μm). Therefore, in the presence of an applied voltage, it is possible to set the position from which light is emitted adequately apart from the position from which light is emitted in the absence of an applied electric field, and moreover, the direction of light emitted from the electro-optic photonic crystal can be changed.

In this embodiment, the direction of the electric field applied to the electro-optic photonic crystal preferably corresponds to the direction with a higher electro-optic coefficient of the electro-optic photonic crystal, and more preferably corresponds to the direction with a higher electro-optic coefficient of the crystal constituting the first dielectric member 3. For example, when the first dielectric member 3 is composed of a LiNbO₃ crystal, the electric field is preferably applied in the c-axis direction of the crystal.

In view of the shape, the electric field is preferably applied in the direction with a smaller thickness of the electro-optic photonic crystal.

In this embodiment, the direction of the incident light L entering the electro-optic photonic crystal from outside corresponds to a direction other than the direction of the normal line of the dispersion surface (wave-vector surface) of the electro-optic photonic crystal, or a direction other than the direction perpendicular to the dispersion surface of the electro-optic photonic crystal. For example, the incident direction of light L is inclined at several angles with respect to the direction of the normal line of the dispersion surface (wave-vector surface).

If the incident direction of light entering the electro-optic photonic crystal corresponds to the direction of the normal line of the dispersion surface of the electro-optic crystal, the light entering the electro-optic photonic crystal is transmitted without being refracted, resulting in no change to the refraction angle.

The operation of the light deflector A according to this embodiment will be described below.

When an electric field is not applied to the light deflector A, the refractive index of the first dielectric member 3 is the same as that in the normal state. As shown in FIG. 1, when light L of a predetermined wavelength from the light source 4 is incident on the electro-optic photonic crystal in the absence of an applied electric field, the light L is refracted at a normal refraction angle, and light L₁ refracted at the normal refraction angle is emitted toward the photonic crystal waveguide B.

When an electric field is applied to the light deflector A, the first dielectric member 3 has a refractive index that is different from the normal refractive index. As shown in FIG. 1, when light L of a predetermined wavelength from the light source 4 is incident on the electro-optic photonic crystal in the presence of an applied electric field, the light L is refracted at a refraction angle that is different from the normal refraction angle, and light L₂ refracted at the refraction angle that is different from the normal refraction angle is emitted toward the photonic crystal waveguide B. Additionally, the difference in refraction angle between the light L₁ and the light L₂ corresponds to Δθr and the difference in the refractive index of the first dielectric member (electro-optic member) 3 between in the presence of an applied electric field and in the absence of an applied electric field corresponds to Δn.

Consequently, the distance P between the position of the electro-optic photonic crystal from which light is emitted in the presence of an applied electric field and the position of the electro-optic photonic crystal from which light is emitted in the absence of an applied electric field is sufficiently large, and moreover, the direction of light emitted from the electro-optic photonic crystal can be changed.

In the light deflector A of this embodiment, by controlling the electric field applied to the electro-optic photonic crystal, the refraction angle of light entering the electro-optic photonic crystal from outside can be controlled, and the direction of light emitted from the electro-optic photonic crystal can be controlled. The refraction angle of light entering the electro-optic photonic crystal from outside can be rapidly changed in response to the change in the electric field applied to the electro-optic photonic crystal. Since the electro-optic photonic crystal can be miniaturized, a miniature light deflector can be produced.

The photonic crystal waveguide B has a photonic bandgap for light L of a predetermined wavelength.

The photonic crystal waveguide B includes conductive substrates 11 and 12 which are placed substantially parallel to each other with a distance therebetween; a transparent sealing member 15 interposed between the peripheries of the substrates 11 and 12 and surrounding the void between the substrates 11 and 12; a plurality of cylinders (third dielectric members) 13 which are interposed between the substrates 11 and 12 and stand at an interval corresponding to a fraction of the wavelength of light; air (refractive index n = 1) as a fourth dielectric member 16 filled in the space surrounded by the substrates 11 and 12 and the sealing member 15 and around the cylinders 13; and a plurality of waveguides 22 interposed between the substrates 11 and 12. That is, in the photonic crystal waveguide B, a plurality of third dielectric members 13 are periodically arrayed separately from each other to form a periodic structure (second periodic structure) 13A, and the region in which the air 16 is present is disposed in the space of the periodic arrangement. The second periodic structure 13A is partially omitted, and regions in which the second periodic structure 13A is omitted correspond to the waveguides 22.

The substrates 11 and 12 are composed of a high-dielectric material (second high-dielectric material), such as Si, and oxide layers 17 and 18 are disposed on the opposing surfaces of the substrates 11 and 12, the oxide layers 17 and 18 being formed by surface oxidation or the like of the Si substrates. The substrates 11 and 12 must be composed of a high-dielectric material. Therefore, the substrates 11 and 12 may be composed of a second high-dielectric material with conductivity, such as GaP, GaAs, InP, ZnTe, Ge, $LiNbO_3$, $LiTaO_3$, $BaTiO_3$, ZnO, $NH_4H_2PO_4$, or $KH_2PO_4$ besides Si (refractive index n = 3.5).

The refractive indexes of these materials alternative to Si are as follows: GaP = 3.45, GaAs = 3.4, InP = 3.29, ZnTe = 9.61, Ge = 4.1, $LiNbO_3$ = 2.2, $LiTaO_3$ = 2.2, $BaTiO_3$ = 2.4, ZnO = 2.0, $NH_4H_2PO_4$ = 1.5, and $KH_2PO_4$ = 1.5. Each material has a high dielectric constant. In the photonic crystal waveguide B, the difference between the refractive index of the cylinders (third dielectric members) 13 which are composed of a second material with a dielectric constant changeable by an electric field in which the dielectric constant is controlled by an electric field and the refractive index of the fourth dielectric member 16 is preferably large because the bandgap can be increased. Therefore, the fourth dielectric member 16 is preferably composed of a material with a refractive index of about 3 or more.

The cylinders 13 which are the third dielectric members are formed by etching or the like of one of the substrates 11 and 12. In this embodiment, a plurality of cylinders 13 are formed at an interval corresponding to a fraction of the wavelength of predetermined light emitted from the light source 4, and a group of the plurality of cylinders 13 constitutes the periodic structure (second periodic structure) 13A.

In this embodiment, when transmission (passing) and interruption of light of a predetermined wavelength are attempted to be controlled, the distance $P_2$ between the centers of two adjacent cylinders 13 is set at about a fraction of the wavelength $\lambda$ of the predetermined light (0.2$\lambda$ to 0.8$\lambda$), and the diameter $D_2$ of the cylinder 13 is set at about a fraction of the wavelength X of the predetermined light (0.2$\lambda$ to 0.8$\lambda$). More specifically, when light with a wavelength of 1,550 nm is used to control the transmission (passing) and interruption of the light of this wavelength, for example, the distance $P_2$ between the centers of two adjacent cylinders 13 may be selected from the range of 0.3 to 1.1 $\mu$m, and the diameter $D_2$ of the cylinder 13 may be selected from the range of 0.14 to 0.5 $\mu$m.

The fourth dielectric member 16 may be composed of a liquid crystal instead of air. As the liquid crystal, for example, a nematic liquid crystal with a dielectric constant of 2 to 3 may be used.

In the photonic crystal waveguide B, as shown in FIG. 1, regions in which parts of the cylinders 13 are linearly omitted are provided in the second periodic structure 13A. In other words, a plurality of regions in which the cylinders 13 are partially omitted extending from the light deflector A side to the opposite side are provided to form a plurality of waveguides 22 (two waveguides in this embodiment).

The plurality of waveguides 22 are formed corresponding to the refraction angles of light L of a predetermined wavelength entering the light deflector A from outside, i.e., corresponding to the directions of light of a predetermined wavelength emitted from the light deflector A. A waveguide 22a is provided corresponding to the refraction angle of light L with a predetermined wavelength entering the light deflector A in the absence of an applied electric field (corresponding to light $L_1$ of the predetermined wavelength emitted from the light deflector A in the absence of an applied electric field). A waveguide 22b is provided corresponding to the refraction angle of light L of a predetermined wavelength entering the light deflector A from outside (corresponding to light $L_2$ of the predetermined wavelength emitted from the light deflector A in the presence of an applied electric field).

In the optical switch shown in FIG. 1, when predetermined light L, for example, with a wavelength of 1,550 nm is allowed to enter the photonic crystal waveguide B (at a section other than the portions in which defects are introduced into the periodic structure 13A), a photonic bandgap for light is generated because the periodic structure 13A formed by the plurality of cylinders 13 and air 16 filled in the space between the cylinders 13 constitute a photonic crystal. Herein, the photonic bandgap corresponds to a frequency band in which light of predetermined frequencies is not transmitted.

When the wavelength of predetermined light L entering the photonic crystal waveguide B is 1,550 nm, the photonic bandgap is 1,450 to 1,550 nm (0.86 to 0.8 eV). Consequently, the region in which the periodic structure 13A including the periodic arrangement of the cylinders 13 reflects and does not transmit light with wavelengths in the range of 1,450 to 1,550 nm.

In contrast, if predetermined light L with a wavelength of 1,550 nm is allowed to enter the waveguide 22 at a section in which the cylinders 13 are omitted, light can pass through the waveguide 22, and the region other than the waveguide 22 forbids the existence of light. Consequently, light is transmitted along (passes through) the waveguide 22. That is, in the periodic structure 13A, omission of the cylinders 13 in part is equivalent to introduction of defects into the periodic structure 13A. In the defects, there is no influence from the photonic bandgap.

An example of the operation of the optical switch according to this embodiment will be described below.

When light L of a predetermined wavelength from the light source 4 is incident on the light deflector A in the absence of an applied electric field, the light L is refracted at a normal refraction angle, and light $L_1$ refracted at the normal refraction angle is emitted toward the photonic crystal waveguide B. The light $L_1$ passes through the waveguide 22a and emitted from the emission side of the photonic crystal waveguide B (opposite to the light deflector A side).

When light L of a predetermined wavelength from the light source 4 is incident on the light deflector A in the presence of an applied electric field, the light L is refracted at a refraction angle which is different from the normal refraction angle by $\Delta\theta r$, and light $L_2$ refracted at the refraction angle which is different from the normal refraction angle is emitted toward the photonic crystal waveguide B. The light $L_2$ passes through the waveguide 22b and emitted from the emission side of the photonic crystal waveguide B (opposite to the light deflector A side) at a position different from the position at which the light $L_1$ is emitted.

Even if light diverts from the waveguide 22 in the middle of the waveguide 22, the light is reflected by the periodic structure 13A composed of the cylinders 13 surrounding the waveguide 22. Consequently, the light is transmitted along the waveguide 22 without fail and is emitted from the emission side of the photonic crystal waveguide B (opposite to the light deflector A side) without fail.

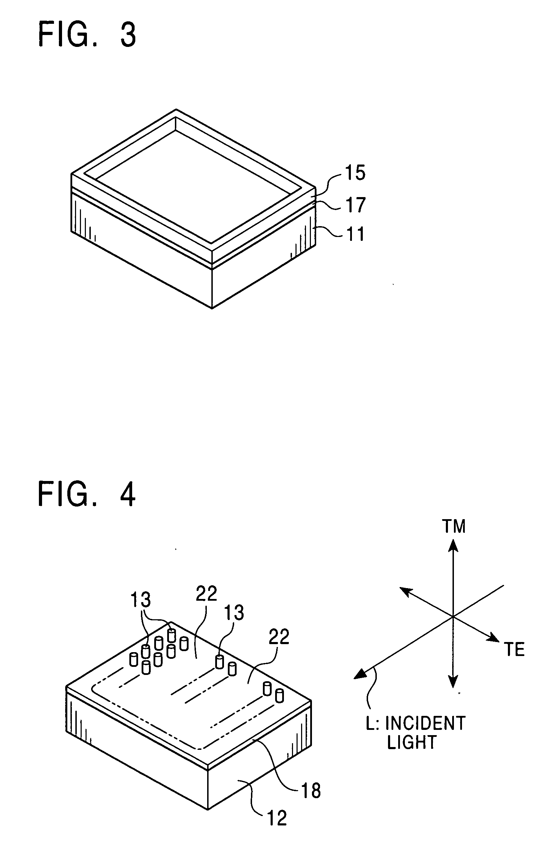

In order to fabricate the photonic crystal waveguide B provided on the optical switch shown in FIG. 1, for example, a surface of the substrate 11 composed of Si is subjected to oxidation treatment to form the oxide layer 17. Next, for example, as shown in FIG. 3, the transparent sealing member is placed along the periphery of the oxide layer 17 on the substrate 11.

A surface of the other substrate 12 composed of Si is etched by chemical etching or physical etching, such as ion beam etching, and many cylinders (third dielectric members) 13 are thereby formed on the substrate 12 as shown in FIG. 4. By not forming the cylinders in the regions to which defects are introduced, the waveguides 22 are formed.

In order to perform chemical etching, a resist is applied onto the surface of the substrate 12, and drawing is performed by an exposure apparatus or the like so as to correspond to the periodic structure of the cylinders. The resist in the drawn regions only are removed by dissolution with a developer to form many holes. Immersion into an etchant is performed using the holes. In order to perform physical etching, the Si substrate is etched by $SF_6$ plasma or the like to form a plurality of cylinders 13.

Alternatively, in order to form perpendicular cylinders, the following method may be employed.

First, a resist composed of poly(methyl methacrylate) (PMMA) or the like which is sensitive to electron beam exposure is applied onto a Si wafer, and a periodic structure is drawn thereon by an electron beam. The PMMA resist in the drawn regions are removed by dissolution with a developer to form windows. Iron atoms with a thickness of about 1 nm are vapor-deposited, and then the PMMA resist is removed by a lift-off method. Thereby, iron atoms aggregate on the surface of the substrate, and iron clusters can be formed only on the regions in which windows are opened corresponding to the regions drawn by the electron beam. Next, by etching the substrate using $SF_6$ plasma gas under appropriate etching conditions, such as the sample temperature and gas pressure, the iron clusters and their peripheries only remain without being etched. Many Si cylinders with a uniform size can be fabricated. The iron clusters themselves do not function as etching masks, but function as nuclei for forming etching masks with a uniform size by condensing the reaction products, such as $S_xF_x$, from the plasma. As described above, iron clusters are capable of forming masks with high etching resistance, and by using such a function, it is possible to fabricate Si cylinders with a uniform size.

By using this method, it is possible to form a periodic structure reliably in which many Si cylinders with a diameter of 40 nm and a height of 1 $\mu$m are arrayed at an interval of about 270 nm at the apexes of tetragonal lattices or at the apexes of trigonal lattices when viewed in plan.

The light deflector A provided on the optical switch shown in FIG. 1 can be fabricated as in the photonic crystal waveguide B described above except that defects are not introduced into the periodic structure and that the first high-dielectric material is used for the two substrates.

In the optical switch of this embodiment, if a plurality of waveguides 22 corresponding to the refraction angles of light L with a predetermined wavelength entering the light deflector A are provided in the photonic crystal waveguide B in advance, when the refraction angle of the light L of the predetermined wavelength entering the electro-optic photonic crystal is changed in response to a change in the magnitude of an electric field applied to the electro-optic photonic crystal and the direction of light of the predetermined wavelength emitted from the electro-optic photonic crystal (outgoing light) is changed, the outgoing light is transmitted (passes) through the waveguide 22 corresponding to the refraction angle of the light of the predetermined wavelength, among a plurality of waveguides 22 provided in the photonic crystal waveguide B. Therefore, the direction emission of the transmitted light of the predetermined wavelength can be switched at high speed. For example, the switching rate can be set at μsec or more. Since the photonic crystal waveguide B can also be miniaturized along with the electro-optic photonic crystal constituting the light deflector A, a miniature optical switch can be produced, for example, at a size of several millimeters.

Because of the structure described above, the portion of the sealing member 5 or sealing member 15 on which light is incident must be translucent or transparent, and the portion from which light is emitted must be translucent or transparent. Therefore, preferably, the entire sealing member 5 or sealing member 15 is transparent.

In the electro-optic photonic crystal having the structure shown in FIG. 1, only a plurality of cylinders 3 must be composed of the first high-dielectric material, and it is not necessary to form the entire substrates 1 and 2 using the first high-dielectric material. The substrates 1 and 2 may be composed of other commonly used material and the cylinders 3 only may be composed of the first high dielectric material. With respect to the photonic crystal waveguide B, the substrates 11 and 12 may be composed of a commonly used material other than the second high-dielectric material and the cylinders 13 only may be composed of the second high-dielectric material.

In the electro-optic photonic crystal having the structure shown in FIG. 1, metal electrodes or electrode layers, such as transparent electrode layers may be separately formed on the air 6 sides of the substrates 1 and 2 so that an electric field can be applied to the periodic structure 3A from the electrode layers. In such a case, it is not always necessary to form the substrates 1 and 2 using a conductor, such as ion-doped $LiNbO_3$. Consequently, a structure may be employed in which the substrates 1 and 2 are composed of an insulator which is not a high-dielectric material; electrode layers, such as indium tin oxide (ITO) layers or metal electrode layers, are separately formed on the opposing surfaces of the insulating substrates; and a plurality of cylinders 3 composed of the first high-dielectric material are interposed between the insulating substrates.

In this embodiment, since the periodic structures provided on the electro-optic photonic crystal and the photonic crystal waveguide are composed of sets of cylinders composed of high-dielectric materials, two-dimensional periodic structures are formed. The periodic structures may be three-dimensional. For example, instead of a structure in which simple cylinders are arrayed, a three-dimensional structure in which cylinders are assembled into a lattice-shape may be acceptable. The three-dimensional structure may be assembled into various shapes, such as a branched three-dimensional shape, a network three-dimensional shape, or a three-dimensional structure in which amorphous dielectric members are assembled.

In the embodiment described above, the electro-optic photonic crystal constituting the light deflector A has the first periodic structure 3A in which the first dielectric members 3 are separated from each other and the second dielectric member 6 is disposed in the space in the peripheries of the first dielectric members 3 and surrounded by the substrates 1 and 2 and the sealing member 5. Alternatively, the first periodic structure may include a main body composed of the first dielectric member disposed in the region surrounded by the substrates 1 and 2 and the sealing member 5, a plurality of holes are periodically formed in the main body separately from each other, and the second dielectric member is filled in the holes.

In the embodiment described above, the photonic crystal constituting the photonic crystal waveguide B has the second periodic structure 13A in which the third dielectric members 13 are separated from each other and the fourth dielectric member 16 is filled in the space in the peripheries of the third dielectric members and surrounded by the substrates 11 and 12 and the sealing member 15. Alternatively, the second periodic structure may include a main body composed of the third dielectric member disposed in the region surrounded by the substrates 11 and 12 and the sealing member 15, a plurality of holes are periodically formed in the main body separately from each other, and the fourth dielectric member is filled in the holes.

As described above, in accordance with the light deflector of the present invention, the refraction angle of light incident from outside can be changed at high speed so that the direction of transmission of the light can be changed, and moreover, miniaturization is enabled.

In accordance with the optical switch of the present invention, since the light deflector and the photonic crystal waveguide are included, the direction of transmitted light of a predetermined wavelength can be switched at high speed, and moreover, miniaturization is enabled.

**Claims**

1. A light deflector comprising an electro-optic photonic crystal in which the refraction angle of light incident from outside can be controlled by controlling an electric field applied to the electro-optic photonic crystal so as to change the refractive index of the material constituting the photonic crystal and in which the change in the refraction angle in response to the change in the unit refractive index of the material is $10^3$ degrees or more.

2. A light deflector according to Claim 1, wherein the electro-optic photonic crystal comprises a combination of a plurality of first dielectric members and a second dielectric member or a combination of a first dielectric member and a plurality of second dielectric members, the first dielectric member comprising a material with a dielectric constant changeable by an electric field in which the dielectric constant is controlled by an electric field, the second dielectric member having a different dielectric constant from that of the first dielectric member, wherein the plurality of first dielectric members or second dielectric members are periodically arrayed separately from each other; the other dielectric member is disposed in the space of the periodic arrangement; and the first dielectric member comprises a material selected from the group consisting of $LiNbO_3$, $LiTaO_3$, $BaTiO_3$, $GaAs$, $ZnO$, $NH_4H_2PO_4$, and $KH_2PO_4$.

3. A light deflector according to Claim 2, wherein a plurality of regions in which air is present as the second dielectric members are periodically arrayed separately from each other in the first dielectric member.

4. A light deflector according to Claim 2, wherein a plurality of first dielectric members are periodically arrayed separately from each other and a region in which air is present as the second dielectric member is disposed in the space of the periodic arrangement.

5. A light deflector according to Claim 1, wherein the direction of the electric field applied to the electro-optic photonic crystal corresponds to the direction with a higher electro-optic coefficient of the electro-optic photonic crystal.

6. A light deflector according to Claim 1, wherein the direction of the light incident from outside corresponds to a direction other than the direction of the normal line of the dispersion surface of the electro-optic photonic crystal.

7. An optical switch comprising:

   a light deflector according to Claim 1; and
   a photonic crystal waveguide,

   wherein the photonic crystal waveguide has a photonic bandgap for light of a predetermined wavelength and also has at least one waveguide which passes the light of the predetermined wavelength.

FIG. 1

FIG. 2

## FIG. 3

## FIG. 4

TM

TE

L: INCIDENT LIGHT